# EUROPEAN PATENT APPLICATION

(11) **EP 4 571 407 A1**
(43) Date of publication of application: **18.06.2025**
(21) Application number: 23852649.5
(22) Date of filing: 10.08.2023
(51) Int. Cl.: G02F 1/1333, G02F 1/13, G02F 1/1339

(54) **LIGHT CONTROL MEMBER, METHOD FOR PRODUCING LIGHT CONTROL MEMBER, AND LIGHT CONTROL BODY**

(30) Priority: 12.08.2022 JP 2022128928
(71) Applicant: Dai Nippon Printing Co., Ltd., Tokyo 162-8001 (JP)
(72) Inventor: MATSUOKA, Shunsuke, Tokyo 162-8001 (JP); INOUE, Takahiro, Tokyo 162-8001 (JP); NAKAMURA, Yusuke, Tokyo 162-8001 (JP)
(74) Representative: Müller-Boré & Partner Patentanwälte PartG mbB
(86) International application number: PCT/JP2023/029362
(87) International publication number: WO 2024/034687

(57) **Abstract**

A light control member is provided with a first multilayer body, a second multilayer body and a liquid crystal layer that is arranged between the first multilayer body and the second multilayer body; and this light control member controls light transmitted therethrough. The first multilayer body comprises a first base material and a first alignment layer; and the second multilayer body comprises a second base material and a second alignment layer. The first multilayer body comprises a first resin layer, in which particles are dispersed, between the first base material and the first alignment layer. The first alignment layer comprises a first projected part on a surface that faces the liquid crystal layer. The particles are positioned so as to overlap with the first projected part in the thickness direction of the light control member.

## Description

### TECHNICAL FIELD

The present invention relates to a light control member, and a light control body including the light control member. The invention also relates to a method of manufacturing the light control member.

### BACKGROUND ART

Conventionally, light control members capable of controlling light transmittance, such as those disclosed in Patent Document 1, are known. As a method of regulating light transmittance of light control members, a technique utilizing liquid crystals, as disclosed in Patent Document 1, is known. Light control members employing liquid crystals can be configured with simplicity and exhibit extremely high lightshielding performance.

In such light control members, liquid crystals are arranged between two alignment layers. Each alignment layer is stacked on a transparent substrate. In the case of controlling light using a light control member that utilizes liquid crystals, the electric field applied to the liquid crystal layer is controlled to alter the alignment of liquid crystal molecules within the liquid crystal layer, thereby controlling light transmission, allowing the light control member to switch between blocking and transmitting external light or continuously vary the amount of transmitted light.

### Citation List

### Patent Document

Patent Document 1: PCT International Publication No. WO 2018/117256

### DISCLOSURE OF THE INVENTION

### Problems to be Solved by the Invention

During the manufacturing process of such light control members, scratches may form on the surface of the alignment layers. When the alignment layer of the light control member is scratched, the liquid crystal molecules at the scratched positions are undesirably fixed in an unintended orientation. Consequently, such light control members suffer from the problem of poor appearance.

The present invention aims to provide a light control member, a method of manufacturing the light control member, and a light control body, with reduced poor appearance that is potentially caused by scratches on the alignment layers.

### Means for Solving the Problems

The present invention resolves the above problems through the following solutions. Embodiments of the present invention are described by using corresponding reference numbers for ease of understanding; however, the invention is not limited thereto.

The light control member (10) of the present invention includes:
a first laminate (12) including a first substrate (21A) and a first alignment layer (23A) stacked on the first substrate;
a second laminate (13) including a second substrate (21B) and a second alignment layer (23B) stacked on the second substrate, the first alignment layer and the second alignment layer being arranged to face each other; and
a liquid crystal layer (14) arranged between the first laminate and the second laminate, the liquid crystal layer containing liquid crystal molecules whose alignment is controlled by applying voltage to an electrode provided on at least one of the first laminate or the second laminate, in which
the first laminate includes a first resin layer (31A) containing dispersed particles (33) between the first substrate and the first alignment layer,
the first alignment layer includes first protrusions (231A) on a surface facing the liquid crystal layer, and
the particles are positioned as overlapping with the first protrusions in a thickness direction of the light control member.

In the light control member of the present invention, the height of the first protrusions in the thickness direction of the light control member may be between 0.2 µm and 2.0 µm inclusive.

In the light control member of the present invention, when the total area of the first protrusions is S1, and the area of the liquid crystal layer is S0, the ratio of S1 to S0 may be between 0.03% and 1.00% inclusive, in a planar view of the light control member,

In the light control member of the present invention, the particle diameter of the particles may be larger than the thickness of the first resin layer.

In the light control member of the present invention, The hardness of the surface on the first alignment layer side of the first resin layer may be B or greater as determined by a pencil hardness test.

In the light control member of the present invention, the second laminate may include a second resin layer containing dispersed particles between the second substrate and the second alignment layer,
the second alignment layer may include second protrusions on a surface facing the liquid crystal layer, and
the particles may be positioned as overlapping with the second protrusions in the thickness direction of the light control member.

In the light control member of the present invention, the liquid crystal layer may include a plurality of bead spacers (24) arranged between the first laminate and the second laminate.

The light control member of the present invention may serve as a transmissive light control member that regulates the amount of transmitted light.

In the light control member of the present invention, the liquid crystal layer (14) may include a guest-host liquid crystal composition.

The light control member of the present invention may be configured to enter a light-blocking state with minimum transmittance in the absence of an electric field.

In the light control member of the present invention, the liquid crystal layer may contain a chiral agent.

In the light control member of the present invention, the electrode may be a transparent electrode, and a first electrode may be arranged between the first resin layer and the first alignment layer.

The light control body of the present invention includes:
a pair of transparent members (41, 42); and
a light control member arranged between the pair of transparent members.

The method of manufacturing a light control member of the present invention includes:
a first laminate producing step of producing a first laminate, the first laminate including a first substrate, a first alignment layer stacked on the first substrate, and a first resin layer between the first substrate and the first alignment layer;
a second laminate producing step of producing a second laminate, the second laminate including a second substrate and a second alignment layer stacked on the second substrate;
a liquid crystal material supplying step of supplying a liquid crystal material to a surface of the second alignment layer opposite to the second substrate; and
a liquid crystal sandwiching step of stacking the first laminate on the second laminate, in which the first laminate producing step includes a particle dispersing step of dispersing particles in the first resin layer.

The method of manufacturing a light control member of the present invention includes:
a first laminate producing step of producing a first laminate, the first laminate including a first substrate, a first alignment layer stacked on the first substrate, and a first resin layer between the first substrate and the first alignment layer;
a second laminate producing step of producing a second laminate, the second laminate including a second substrate, a second alignment layer stacked on the second substrate, and a second resin layer between the second substrate and the second alignment layer;
a liquid crystal material supplying step of supplying a liquid crystal material to a surface of the second alignment layer opposite to the second substrate; and
a liquid crystal sandwiching step of stacking the first laminate on the second laminate, in which the first laminate producing step includes a particle dispersing step of dispersing particles in the first resin layer, and
the second laminate producing step includes a particle dispersing step of dispersing particles in the second resin layer.

### Effects of the Invention

The present invention makes it possible to reduce poor appearance caused by scratches on the alignment layer.

### BRIEF DESCRIPTION OF THE DRAWINGS

FIG. 1 is a diagram illustrating a light control body 1 of an embodiment;
FIG. 2 is a cross-sectional view illustrating the layer structure of a light control member 10 of the embodiment;
FIG. 3 is an enlarged cross-sectional view illustrating a first laminate 12 of the light control member 10 illustrated in FIG. 2;
FIG. 4 is a diagram illustrating an aspect of how an object 60 comes into contact with the surface of the first laminate 12 of the embodiment;
FIG. 5 is a diagram illustrating the aspect of observing the light control member 10 of the embodiment and a light control member 101 of a comparative example;
FIGS. 6A and 6B are schematic diagrams illustrating the distribution of bead spacers 24 in the light control member 10 of the embodiment, and in the light control member 101 of the comparative example;
FIG. 7 is an enlarged cross-sectional view illustrating the first laminate 12 of a modified embodiment; and
FIG. 8 is a diagram illustrating the light control member 10 of the modified embodiment.

### PREFERRED MODE FOR CARRYING OUT THE INVENTION

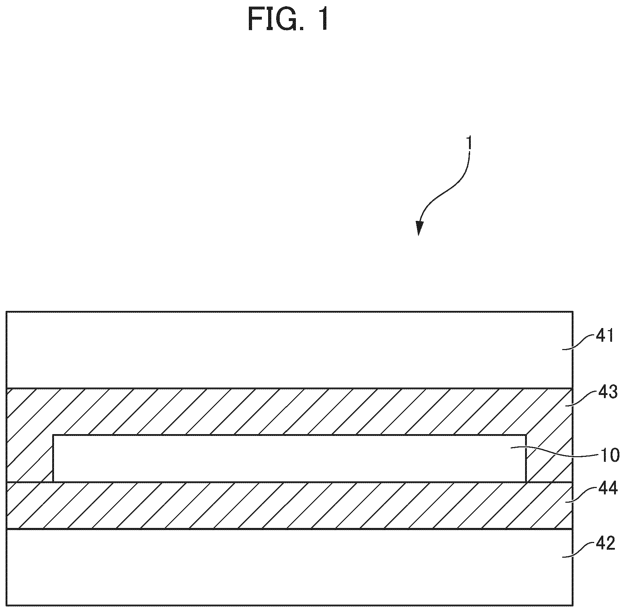

Hereinafter, the embodiments of the present invention will be described with reference to the drawings. The diagrams, including FIG. 1 and others, are schematic and are appropriately exaggerated to facilitate understanding, with dimensions and shapes adjusted as necessary. The numerical values and material names for the components described herein are merely examples of embodiments, not intended to limit the invention, and may be selected and applied as appropriate. In this specification, terms that specify shapes or geometric conditions, such as "parallel" or "orthogonal", include not only strict meanings but also states with tolerances that provide similar optical functions and can be regarded as parallel or orthogonal.

In this specification, terms such as "plate", "sheet", and "film" are used as general usage, arranged in order of decreasing thickness: plate, sheet, and film. This distinction also apply to the description in this specification. However, this distinction carries no technical significance, and these terms may be used interchangeably as appropriate. The term "planar view" refers to the state viewed from a direction perpendicular to the primary surface of the light control body or the light control member. The term "transparent" refers to the property of materials that transmit light of at least the wavelength for intended use. For example, even if a material does not transmit visible light but transmits infrared light, the material is treated as transparent when used for infrared applications.

FIG. 1 is a diagram illustrating a light control body 1 of the present embodiment. FIG. 1 illustrates a cross-section parallel to the thickness direction of the light control body 1. The light control body 1 of the present embodiment is a light-control device capable of regulating the amount of transmitted light and includes a light control member 10. The light control body 1 is not limited to specific applications and can be applied across various technical fields that require regulating light transmittance. For example, the light control body 1 may be installed in places where light control is conducted, such as windows of buildings, showcases, indoor transparent partitions, vehicle windows (such as front, side, rear, or roof windows), and vehicle interior partition boards. This enables the control of light entering the interior of buildings or vehicles, or the control of light entering specific areas inside these structures.

The components of the light control body 1 will be described below.

As illustrated in FIG. 1, the light control body 1 of the present embodiment adopts a structure (or so-called laminated glass), in which a light control member 10 is integrally sandwiched between a pair of transparent members (first transparent member 41 and second transparent member 42) via a first bonding layer 43 and a second bonding layer 44. The first transparent member 41, the first bonding layer 43, the light control member 10, the second bonding layer 44, and the second transparent member 42 are sequentially stacked in this order from the upper side in FIG. 1 along the thickness direction of the light control body 1.

The pair of transparent members will be described first. The pair of transparent members (first transparent member 41 and second transparent member 42) are preferably provided with high visible light transmittance to sufficiently transmit external light when the light control body does not block external light. Materials with visible light transmittance of 90% or higher is preferably used. Examples of materials for the pair of transparent members include inorganic glass such as soda glass and float glass, and resin glass such as polycarbonate and acrylic resin. In a case where inorganic glass is used for the pair of transparent members, the light control body 1 can exhibit excellent heat resistance and durability. In a case where resin glass is used for the pair of transparent members, the light control body 1 can achieve lightweight. The pair of transparent members (first transparent member 41 and second transparent member 42) may also undergo surface treatments such as hard coating, as necessary.

The visible light transmittance can be measured using a spectrophotometer. A "UV-3600i Plus" manufactured by Shimadzu Corporation was used as a spectrophotometer. The measurement was conducted in accordance with JIS K 0115:2020. Visible light transmittance was defined as the average transmittance across the measurement wavelength range between 380 nm and 780 nm inclusive.

Next, the first bonding layer 43 and the second bonding layer 44 will be described. The first bonding layer 43 is arranged between the first transparent member 41 and the light control member 10, thereby bonding the first transparent member 41 and the light control member 10 together. The second bonding layer 44 is arranged between the second transparent member 42 and the light control member 10, thereby bonding the second transparent member 42 and the light control member 10 together.

The first bonding layer 43 and the second bonding layer 44 may be formed of various types of adhesive or tacky materials. Desirably, materials with high visible light transmittance is used for the first bonding layer 43 and the second bonding layer 44. Example of typical bonding layers include layers formed of polyvinyl butyral (PVB). Alternatively, the bonding layers may be formed of ethylene-vinyl acetate copolymer (EVA), cyclic olefin polymer (COP), or similar materials.

In the present embodiment, a planar surface shape (i.e., a flat plate shape) is illustrated as an example of the shape of the light control body 1. However, the invention is not limited to this; the light control body 1 may include a three-dimensional curved surface. For example, the light control body 1 may be provided with a convex shape on one surface side. The shape and size of the light control body 1 may be adapted as required for the purpose of application. The light control body 1 may also be configured such that the light control member 10 is affixed to a single transparent member such as a sheet of glass, using an adhesive.

The light control body 1 may include additional functional layers designed to achieve specific functions, beyond the examples illustrated. A single functional layer may provide two or more functions. For instance, any functions may be imparted to the first transparent member 41, the second transparent member 42, the first bonding layer 43, the second bonding layer 44 of the light control body 1, or the first laminate 12 and the second laminate 13 of the light control member 10 described later. Examples of functions imparted to the light control body 1 include anti-reflection (AR) functions, scratch resistance functions through hard coatings (HC), infrared shielding (reflection) functions, ultraviolet shielding (reflection) functions, anti-fouling functions, and the like.

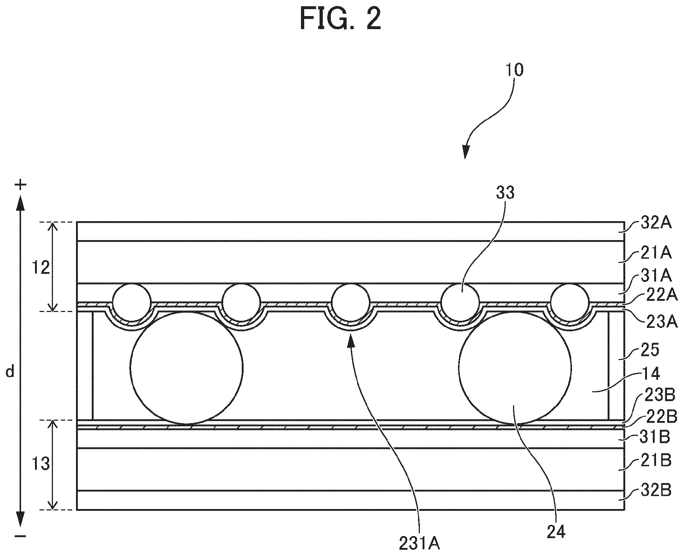

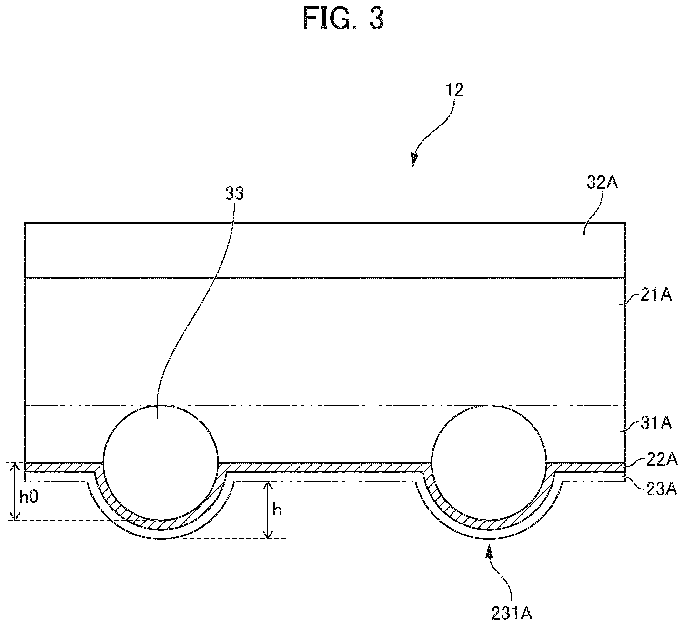

Next, the light control member 10 will be described. FIG. 2 is a cross-sectional view illustrating the layer structure of a light control member 10 of the present embodiment. FIG. 2 schematically illustrates a cross-section parallel to the thickness direction of the light control member 10. The arrow d illustrated in FIG. 2 is parallel to the thickness direction of the light control member 10. In order to facilitate understanding of the invention, the upper side of the drawing is designated as the +d direction, and the lower side of the drawing is designated as the -d direction. FIG. 3 is an enlarged cross-sectional view illustrating the first laminate 12 of the light control member 10 illustrated in FIG. 2.

The light control member 10 of the present embodiment is formed as a flexible film. In the present embodiment, as illustrated in FIG. 2, a flat plate shape is illustrated as an example of the overall shape of the light control member 10. However, the light control member 10 can also be adhered to a transparent member with a curved surface like a vehicle sunroof.

The light control member 10 can vary the visible light transmittance when a voltage is applied. In other words, the light control member 10 imparts a light-control function to the light control body 1. The light control member 10 includes a first laminate 12, a second laminate 13, and a liquid crystal layer 14 arranged between the first laminate 12 and the second laminate 13. The first laminate 12 includes a first substrate 21A and a first alignment layer 23A stacked on the first substrate 21A. The second laminate 13 includes a second substrate 21B and a second alignment layer 23B stacked on the second substrate 21B. The first alignment layer 23A and the second alignment layer 23B are arranged so as to face each other. The liquid crystal layer 14 contains liquid crystal molecules whose alignment is controlled by applying a voltage to electrodes provided on at least one of the first laminate 12 or the second laminate 13. The light control member 10 includes wiring (not illustrated) to connect to an external power supply (not illustrated). Voltage can be applied to the light control member 10 via the wiring from the external power supply.

The first laminate 12 includes a first resin layer 31A with dispersed particles 33, between the first substrate 21A and the first alignment layer 23A. The first alignment layer 23A includes a plurality of first protrusions 231A on the surface facing the liquid crystal layer 14. The particles 33 are positioned as overlapping with the first protrusions 231A in the thickness direction of the light control member 10.

The first alignment layer 23A may not necessarily be stacked in direct contact with the first substrate 21A, and another layer may be interposed between the first substrate 21A and the first alignment layer 23A. In FIG. 2, a first electrode 22A is arranged between the first substrate 21A and the first alignment layer 23A. The first laminate 12 of the present embodiment includes a first protective layer 32A, the first substrate 21A, the first resin layer 31A, the first electrode 22A, and the first alignment layer 23A, which are stacked in order from the +d side (upper side in the drawing) in the thickness direction (d direction) of the light control member 10.

As illustrated in FIG. 2, the first electrode 22A is arranged between the first resin layer 31A and the first alignment layer 23A, thereby allowing for ensuring sufficient transparency of the light control member 10. Furthermore, the first electrode 22A is arranged closer to the liquid crystal layer 14 side than the first resin layer 31A, thereby allowing for effectively controlling the alignment of the liquid crystal molecules by applying a voltage to the first electrode 22A.

A silicon oxide (SiO₂) layer (not illustrated) may also be provided between the first resin layer 31A and the first electrode 22A**.** This silicon oxide layer enhances the adhesion between the first electrode 22A and the first resin layer 31A, and improves the barrier properties of the first laminate 12 against water vapor and oxygen, thereby reducing water vapor permeability and oxygen permeability.

Similarly to the first laminate 12, the second alignment layer 23B may not necessarily be formed in direct contact with the second substrate 21B, and another layer may be interposed between the second substrate 21B and the second alignment layer 23B. In FIG. 2, a second electrode 22B is arranged between the second substrate 21B and the second alignment layer 23B. The second laminate 13 of the present embodiment includes a second protective layer 32B, a second substrate 21B, the second resin layer 31B, the second electrode 22B, and the second alignment layer 23B, which are stacked in this order from the -d side (lower side in the drawing) in the thickness direction (d direction) of the light control member 10. In the second laminate 13 as well, a silicon oxide (SiO₂) layer may be provided between the second resin layer 31B and the second electrode 22B.

The light control member 10 can change the alignment of liquid crystal molecules of the guest-host liquid crystal composition of the liquid crystal layer 14 by varying the applied voltage via the first electrode 22A and the second electrode 22B provided in the first laminate 12 and second laminate 13. Thus, the light control member 10 changes the amount of transmitted light. In other words, the light control member 10 is a transmissive light control member.

The individual components of the light control member 10 will be described below.

The first substrate 21A appropriately supports the first alignment layer 23A and the first electrode 22A. Similarly, the second substrate 21B appropriately supports the second alignment layer 23B and the second electrode 22B. The first substrate 21A and the second substrate 21B are resin films with high visible light transmittance and flexibility. Alternatively, the first substrate 21A and the second substrate 21B may adopt a non-flexible configuration, depending on the shape of the light control body 1.

Examples of materials for such light-transmitting resin films include cellulose acetate resins such as triacetyl cellulose (TAC); polyester resins such as polyethylene terephthalate (PET) or polyethylene naphthalate (PEN); polyolefin resins such as polyethylene (PE), polypropylene (PP), polystyrene, polymethylpentene, and ethylene-vinyl acetate (EVA); vinyl resins such as polyvinyl chloride or polyvinylidene chloride; acrylic resins; polyurethane resins; polysulfone (PSF); polyether sulfone (PES); polycarbonate (PC); polyethers; polyether ketones (PEK); (meth)acrylonitrile; cyclic olefin polymers (COP); cyclic olefin copolymers; and the like. Particularly preferred materials include polycarbonate, cyclic olefin polymers, polyethylene terephthalate, and the like. The first substrate 21A and the second substrate 21B are preferably formed from materials with a visible light transmittance of 80% or higher.

The thickness of the transparent resin films used as the first substrate 21A and the second substrate 21B may vary depending on the material, and can be chosen within a range that maintains the flexibility of the resin film. For example, in a case where the first substrate 21A and the second substrate 21B are films formed from polyethylene terephthalate, the thickness of the substrates is preferably between 50 µm and 200 µm inclusive. This range of thickness can provide excellent strength and optical properties of the first substrate 21A and the second substrate 21B. The first substrate 21A and the second substrate 21B may be made of the same material, or may differ in at least material or configuration.

The light control member 10 may include the first protective layer 32A on the surface of the first substrate 21A opposite to the surface on which the liquid crystal layer 14 is stacked, and may include the second protective layer 32B on the surface of the second substrate 21B opposite to the surface on which the liquid crystal layer 14 is stacked.

The materials for the first protective layer 32A and the second protective layer 32B are preferably resin materials with flexibility and high visible light transmittance. Examples of typical materials for the first protective layer 32A and the second protective layer 32B include layers formed of acrylic resins, urethane resins, silicon resins, or the like. The first protective layer 32A and the second protective layer 32B are provided, thereby allowing for suppressing dents or cracks in the first substrate 21A and the second substrate 21B, and improving the weather resistance and pressure resistance of the light control member 10.

The surface of the first protective layer 32A opposite to the first substrate 21A, and the surface of the second protective layer 32B opposite to the second substrate 21B may be provided with a hard coat function. As a specific definition of the hard coat function, the surface of the first protective layer 32A opposite to the first substrate 21A, and the surface of the second protective layer 32B opposite to the second substrate 21B have a surface hardness of B or greater as determined by a pencil hardness test in compliance with JIS K 5600-5-4 (1999). However, in a case where the hardness is excessively high, when the curvature of the light control member 10 increases, there is a risk of cracking in the first protective layer 32A and the second protective layer 32B. Therefore, the first protective layer 32A and the second protective layer 32B preferably do not crack even when bent to a curvature radius (R) of 500 mm. As a result, the first protective layer 32A and the second protective layer 32B achieve the effect of suppressing the formation of fine scratches (so-called surface scratches) on the first substrate 21A and the second substrate 21B caused by external factors. Furthermore, the first protective layer 32A achieves the effect of suppressing scratches on the surface of the first substrate 21A during the formation of the first resin layer 31A on the first substrate 21A, as described later. Similarly, the second protective layer 32B achieves the effect of suppressing scratches on the surface of the second substrate 21B during the formation of the second resin layer 31B on the second substrate 21B, as described later.

The first alignment layer 23A and the second alignment layer 23B are the layers adjacent to the liquid crystal layer 14, and regulate the alignment of the liquid crystal molecules in the liquid crystal layer 14. The method of manufacturing the first alignment layer 23A and the second alignment layer 23B is not particularly limited. Any technique can be employed to produce the first alignment layer 23A and the second alignment layer 23B provided with liquid crystal alignment properties. For example, the first alignment layer 23A and the second alignment layer 23B may be produced using a photoalignment method, in which polarized ultraviolet rays are directly applied to a polymer film to selectively align the polymer chains in the polarization direction. Alternatively, the first alignment layer 23A and the second alignment layer 23B may be produced by applying a rubbing treatment onto resin layers such as polyimide. Instead of applying a rubbing treatment, the first alignment layer 23A and the second alignment layer 23B may be formed by imparting fine lineshaped concave-convex patterns created by the rubbing treatment. In a case where a guest-host (GH) type described later is used for the liquid crystal layer 14, the first alignment layer 23A and the second alignment layer 23B may be formed without a rubbing treatment.

The thickness of the first alignment layer 23A is between 0.05 µm and 0.5 µm inclusive. Similarly, the thickness of the second alignment layer 23B is between 0.05 µm and 0.5 µm inclusive. These ranges of the thickness of the first alignment layer 23A and the second alignment layer 23B can ensure favorable light transmittance for the light control member 10, and suppress light leakage near the bead spacers 24 caused by excessive thickness of the alignment layers. The thicknesses of the first alignment layer 23A and the second alignment layer 23B are determined as the averages of the measurements taken at 30 points on the first alignment layer 23A and the second alignment layer 23B, which are deemed sufficient to reflect the overall trend. In particular, the thicknesses of the first alignment layer 23A and the second alignment layer 23B, produced using the manufacturing method described later and specifically configured as described here, are defined as the averages of the measurements taken at 30 points. The thickness of the first alignment layer 23A is measured at points at least 20 µm away from the first protrusions 231A, excluding the first protrusions 231A described later. The thicknesses of the first alignment layer 23A and the second alignment layer 23B are measured using images of cross-sections of the first alignment layer 23A and the second alignment layer 23B captured with a scanning electron microscope (SEM). Specifically, the thicknesses of the first alignment layer 23A and the second alignment layer 23B are measured using S-4800 TYPE II SEM manufactured by Hitachi High-Tech Corporation.

As illustrated in FIG. 2, the first alignment layer 23A includes the plurality of first protrusions 231A on the liquid crystal layer 14 side (-d side). As illustrated in FIG. 2, the first protrusions 231A appear to at least partially surround the bead spacers 24 and hold the bead spacers 24; however, in practice, the first protrusions 231A do not necessarily hold the bead spacers 24.

The first protrusions 231A are portions of the first alignment layer 23A, protruding toward the liquid crystal layer 14 side. The height h (protrusion height) of the first protrusions 231A is between 0.2 µm and 2.0 µm inclusive, which is defined as the dimension from the surface on the liquid crystal layer 14 side of the first alignment layer 23A, where no first protrusions 231A are formed, to the apex of the first protrusions 231A (the point furthest toward the liquid crystal layer 14 side) in the thickness direction (d direction) of the light control member 10. The height h of the first protrusions 231A is more preferably between 0.4 µm and 1.0 µm inclusive. In a case where the height h of the first protrusions 231A is less than 0.2 µm, the surface of the first alignment layer 23A is more prone to scratches. In a case where the height h of the first protrusions 231A is 0.4 µm or greater, scratches on the surface of the first alignment layer 23A can be prevented more effectively. In a case where the height h of the first protrusions 231A exceeds 2.0 µm, when the first laminate 12 and the second laminate 13 are stacked in a state where the first protrusions 231A overlap with the bead spacers 24, the thickness (cell gap) of the liquid crystal layer 14 in this region becomes greater than the thickness in other regions, leading to visible liquid crystal irregularities and poor appearance, which are undesirable.

The height h of the first protrusions 231A is determined as the average of the measurements taken at 30 samples of the first protrusions 231A, which are deemed sufficient to reflect the overall trend. In particular, the height h of the first protrusions 231A, produced using the manufacturing method described later and specifically configured as described here, is measured using a scanning white light interferometer. The height h of the first protrusions 231A is calculated from images of the surface shape of the first alignment layer 23A captured using a NewView 9000 interferometer (manufactured by Zygo Corporation) as a scanning white light interferometer.

In a planar view of the light control member 10, when the total area of the first protrusions 231A is S1, and the area of the liquid crystal layer 14 is S0, the ratio of S1 to S0 may be 0.03% or greater, or 0.06% or greater. In a planar view of the light control member 10, when the total area of the first protrusions 231A is S1, and the area of the liquid crystal layer 14 is S0, the ratio of S1 to S0 may be 1.00% or less, or 0.20% or less. In a planar view of the light control member 10, when the total area of the first protrusions 231A is S1, and the area of the liquid crystal layer 14 is S0, the numerical range of the ratio of S1 to S0 may be defined by combining one selected from the upper limit value options and the other selected from the lower limit value options. Specifically, in a planar view of the light control member 10, when the total area of the first protrusions 231A is S1, and the area of the liquid crystal layer 14 is S0, the ratio of S1 to S0 may be between 0.03% and 1.00% inclusive, between 0.06% and 1.00% inclusive, between 0.03% and 0.20% inclusive, or between 0.06% and 0.20% inclusive.

The ratio of S1 to S0 satisfying the above range allows for reducing scratches on the first alignment layer 23A, and ensuring sufficient transparency of the light control member 10. In a case where the ratio of S1 to S0 is less than 0.03%, the number of the first protrusions 231A is decreased, and the distance between the adjacent first protrusions 231A is increased, resulting in the reduced effect of suppressing scratches on the first alignment layer 23A. On the other hand, in a case where the ratio of S1 to S0 is greater than 1.00%, the haze becomes pronounced, reducing the transparency of the light control member 10 in the light-transmitting state. Therefore, the ratio of S1 to S0 is preferably within the above range. The method of calculating the ratio of S1 to S0 will be described later.

The first resin layer 31A is arranged between the first substrate 21A and the first alignment layer 23A, containing dispersed particles, and serving as the layer for forming the first protrusions 231A of the first alignment layer 23A. As illustrated in FIG. 3, the particles 33 are positioned as overlapping with the first protrusions 231A in the thickness direction of the light control member 10. As illustrated in FIG. 3, the first resin layer 31A contains the plurality of particles 33 protruding toward the liquid crystal layer 14 side. In other words, the particles 33 protrude from the first resin layer 31A, thereby forming the first protrusions 231A on the first alignment layer.

The surface on the first alignment layer 23A side of the first resin layer 31A may be provided with a hard coat function. As a specific definition of hard coat function, the surface of the first resin layer 31A opposite to the first substrate 21A side has a surface hardness of B or greater as determined by a pencil hardness test in compliance with JIS K 5600-5-4 (1999). However, excessively high hardness may result in cracking in the first resin layer 31A when the curvature of the light control member 10 increases. Therefore, the first resin layer 31A preferably does not crack even when bent to a curvature radius (R) of 500 mm. As a result, when a force is applied to the first substrate 21A from the liquid crystal layer 14 side, the first resin layer 31A can protect the first substrate 21A, thereby allowing for improving the pressure resistance of the first substrate 21A. Consequently, dents and cracks in the first substrate 21A can be suppressed, and the weather resistance and thermal resistance of the light control member 10 can be improved.

The first resin layer 31A is composed of a resin material with dispersed particles 33. The resin material is preferably flexible and transparent. The first resin layer 31A includes the resin material with dispersed particles, thereby allowing for holding the particles 33. In a case where the particles 33 are dispersed in the first alignment layer 23A instead of the first resin layer 31A, the thickness of the first alignment layer 23A is between 0.05 µm and 0.5 µm inclusive (or as thin as 0.1 µm in the present embodiment), the particles 33 are likely to easily detach under external impacts. Examples of preferred resin materials include UV-curable resins such as acrylic resins, urethane resins, and silicone resins.

The thickness of the first resin layer 31A is between 0.5 µm and 5.0 µm inclusive. This thickness range of the first resin layer 31A allows for sufficiently suppressing detachment of the particles 33 and securely holding the particles 33. The thickness of the first resin layer 31A is determined as the average of the measurements taken at 30 points on the first resin layer 31A, which are deemed sufficient to reflect the overall trend. In particular, the thickness of the first resin layer 31A, specifically configured as described here, is determined as the average of the measurements taken at 30 points. The thickness of the first resin layer 31A is measured at points at least 20 µm away from the protruding particles 33, excluding the particles 33 protruding from the first resin layer 31A. The thickness of the first resin layer 31A is measured from images of a cross-section of the first resin layer 31A captured using a scanning electron microscope (SEM). Specifically, S-4800 TYPE II SEM manufactured by Hitachi High-Tech Corporation is used as a scanning electron microscope (SEM) to measure the thickness of the first alignment layer 23A and the thickness of the second alignment layer 23B.

The particles 33 are spherical or approximately spherical. The particle diameter (the diameter of the particles) is preferably larger than the thickness of the first resin layer 31A. As illustrated in FIG. 3, such a particle diameter of the particles 33 allows the particles 33 to protrude from the first resin layer 31A. Sphericity of the particles 33 can ensure uniform protrusion height of the particles 33 from the first resin layer 31A, and uniform height of the first protrusions 231A formed of the particles 33 on the first alignment layer 23A. In the present embodiment, the particles 33 are irregularly arranged in a planar view of the light control member 10; however, this is not limiting, and the particles 33 may also be regularly arranged.

Filler materials are preferably used for the particles 33, and micro fillers with an average particle diameter between 0.1 µm and 10 µm inclusive are more preferably used. The particles 33 are preferably sufficiently hard. Examples of preferable materials for the particles 33 include resin materials, such as acrylic resins, styrene-based resins, and urethane resins. The particles 33 may be colored to a predetermined color, depending on the operating environment of the light control member 10.

The protrusion height h0 of the particles 33 from the first resin layer 31A is between 0.2 µm and 2.0 µm inclusive, in which the protrusion height is defined as the dimension from the surface on the liquid crystal layer 14 side of the first resin layer 31A in a region without the particles 33 to the apex of the particles 33 (the point furthest toward the liquid crystal layer 14 side) in the thickness direction (d direction) of the light control member. A protrusion height h0 of the particles 33 from the first resin layer 31A is more preferably between 0.4 µm to 1.0 µm inclusive. The thickness of the first electrode 22A described later and the thickness of the first alignment layer 23A are thinner than the protrusion height h0 of the particles 33 from the first resin layer 31A. Therefore, the protrusion height h0 of the particles 33 from the first resin layer 31A is considered to correspond to the height h (protrusion height) of the first protrusions 231A. The protrusion height h0 of the particles 33 from the first resin layer 31A is set to the above dimensions, thereby allowing for securing the sufficient height of the first protrusions 231A formed on the first alignment layer 23A.

In a planar view of the light control member 10, when the total area of the particles 33 is A1, and the area of the liquid crystal layer 14 is A0, the ratio of A1 to A0 may be 0.03% or greater, or 0.06% or greater. In a planar view of the light control member 10, when the total area of the particles 33 is A1, and the area of the liquid crystal layer 14 is A0, the ratio of A1 to A0 may be 1.00% or less, or 0.20% or less. In a planar view of the light control member 10, when the total area of the particles 33 is A1, and the area of the liquid crystal layer 14 is A0, the numerical range of the ratio of A1 to A0 may be defined by combining one selected from the upper limit value options and the other selected from the lower limit value options. Specifically, in a planar view of the light control member 10, when the total area of the particles 33 is A1, and the area of the liquid crystal layer 14 is A0, the ratio of A1 to A0 may be between 0.03% and 1.00% inclusive, between 0.06% and 1.00% inclusive, between 0.03% and 0.20% inclusive, or between 0.06% and 0.20% inclusive. In a planar view of the light control member 10, the ratio of A1 to A0 represents the ratio of the total area of the particles 33 to the area of the liquid crystal layer 14.

The method of calculating the ratio of A1 to A0 in a planar view of the light control member 10 is described below. The ratio of A1 to A0 is calculated based on the ratio of the area of the particles 33 to the unit area of the first resin layer 31A, using the following formula. In the present embodiment, the ratio of A1 to A0 is calculated as the ratio of the area of the particles 33 to a 1 mm² area of the first resin layer 31A. Specifically, in the 1 mm² area of the first resin layer 31A, the ratio of A1 to A0 is calculated as follows: the cross-sectional area of a single particle 33 (mm²) is multiplied by the number of particles 33 in the 1 mm² area, and the result is divided by 1 mm² and multiplied by 100.

Ratio of A1 to A0 (%) = {Cross-sectional area of one particle 33 (mm²/particle) × Number of particles 33 in unit area (particles)} / Unit area (mm²) × 100

The method of calculating the cross-sectional area of one particle 33 will be described below. The cross-sectional area of one particle 33 is calculated based on the particle diameter of the particle 33, using the following formula. The particle diameter of the particles 33 is measured using a focused ion beam (FIB) processing combined with scanning electron microscopy (SEM) observation. The method combining the FIB processing and the SEM observation is also referred to as an FIB-SEM method. The particle diameter of the particle 33 is determined from images of the cross-section of the first resin layer 31A obtained by the FIB-SEM method. The images of the cross-section of the first resin layer 31A are obtained by the FIB processing and SEM observation at 50 nm intervals repeated 100 times.Cross-sectional area of particle 33 = (Particle diameter of particle 33 / 2)2 × π

The number of the particles 33 per unit area is measured from images of the first resin layer 31A captured by an optical microscope in a planar view of the first laminate 12. Specifically, the number of the particles 33 per unit area is determined by counting the particles in the images of the first resin layer 31A captured by an optical microscope in a planar view of the first laminate 12. Interference regions around the particles 33 may be observed due to dispersion of the particles 33 in the first resin layer 31A; however, the interference regions are not included in the particle count of the particles 33 per unit area. In the present embodiment, the number of the particles 33 per 1 mm² of the first resin layer 31A is calculated by counting the particles in images of the first resin layer 31A captured by an optical microscope in a planar view of the first laminate 12.

The particles 33 are positioned as overlapping with the first protrusions 231A in the thickness direction of the light control member 10. In other words, the particles 33 protrude from the first resin layer 31A, thereby forming the first protrusions 231A on the first alignment layer 23A. Specifically, in a planar view of the light control member 10, when the total area of the first protrusions 231A is S1, and the area of the liquid crystal layer 14 is S0, the ratio of S1 to S0 corresponds to the ratio of A1 to A0 when the total area of the particles 33 is A1, and the area of the liquid crystal layer 14 is A0. In other words, the ratio of S1 to S0 is a value that can be determined by calculating the ratio of A1 to A0.

In a planar view of the light control member 10, when the total area of the particles 33 is A1, and the area of the liquid crystal layer 14 is A0, the ratio of A1 to A0 may be between 0.03% and 1.00% inclusive, between 0.06% and 1.00% inclusive, between 0.03% and 0.20% inclusive, or between 0.06% and 0.20% inclusive, as described above. The ratio of A1 to A0 satisfying this range allows the ratio of S1 to S0 to fall within the similar numerical range. Specifically, the ratio of A1 to A0 satisfying this range allows the ratio of S1 to S0 to satisfy this range, allowing for reducing scratches on the first alignment layer 23A, and ensuring sufficient transparency of the light control member 10.

The second resin layer 31B may be arranged between the second substrate 21B and the second alignment layer 23B. The material for the second resin layer 31B may be the same as or different from the resin material for the first resin layer 31A. The second resin layer 31B may be arranged on the liquid crystal layer 14 side of the second substrate 21B, and may be provided with a hard coat function as in the case of the first resin layer 31A. As a result, when a force is applied to the second substrate 21B from the liquid crystal layer 14 side, the second resin layer 31B can protect the second substrate 21B, thereby allowing for improving the pressure resistance. In other words, dents and cracks in the second substrate 21B can be suppressed, and the weather resistance and thermal resistance of the light control member 10 can be improved.

The first electrode 22A is arranged between the first substrate 21A and the first alignment layer 23A, and the second electrode 22B is arranged between the second substrate 21B and the second alignment layer 23B. As illustrated in FIG. 2, in the present embodiment, the first electrode 22A is arranged on the liquid crystal layer 14 side of the first resin layer 31A. Similarly, the second electrode 22B is arranged on the liquid crystal layer 14 side of the second resin layer 31B. The first electrode 22A and the second electrode 22B may be formed from transparent metal thin films, such as tin oxide-based, indium oxide-based, or zinc oxide-based materials. Examples of tin oxide-based (SnO₂) materials include NESA (tin oxide, SnO₂), ATO (Antimony Tin Oxide: Antimony-doped Tin Oxide), and FTO (Fluorine-doped Tin Oxide). Examples of indium oxide-based In₂O₃) materials include indium oxide (In₂O₃), ITO (Indium Tin Oxide), and IZO (Indium Zinc Oxide). Examples of zinc oxide-based (ZnO) materials include zinc oxide (ZnO), AZO (Aluminum-doped Zinc Oxide), and GZO (Gallium-doped Zinc Oxide).

The arrangement of the first electrode 22A and the second electrode 22B is not particularly limited, and the electrodes may be patterned and only arranged at specific locations or uniformly arranged. When a voltage is applied to the first electrode 22A and the second electrode 22B, an electric field that influences the liquid crystal layer 14 arranged between the first electrode 22A and the second electrode 22B, thereby controlling the alignment of the liquid crystal molecules contained within the liquid crystal layer 14. The visible light transmittance of the first electrode 22A and the second electrode 22B is preferably 50% or higher. In the present embodiment, the first electrode 22A and the second electrode 22B are so-called transparent electrodes formed from the transparent metal thin films. The thickness of the first electrode 22A and the second electrode 22B is between 0.03 µm and 0.05 µm inclusive. Particularly, the thickness of the first electrode 22A preferably satisfies the above range, since excessive thickness thereof reduces the height of the first protrusions 231A formed of the particles 33 from the first resin layer 31A. In the present embodiment, the thickness of the first electrode 22A and the second electrode 22B is, for example, 0.05 µm.

The liquid crystal layer 14 is arranged between the first laminate 12 and the second laminate 13. In the present embodiment, the liquid crystal layer 14 is arranged between the first alignment layer 23A and the second alignment layer 23B. The liquid crystal layer 14 may employ vertical alignment (VA), twisted nematic (TN), in-plane switching (IPS), fringe field switching (FFS), or guest-host (GH) methods. In the present embodiment, the liquid crystal layer 14 employs the GH method. In the case of using the GH method, the liquid crystal layer 14 includes a guest-host liquid crystal composition containing liquid crystal molecules and dichroic dye compositions. Additionally, in the case of using the GH method, the liquid crystal layer 14 may include a chiral agent to induce horizontal alignment of the liquid crystal molecules and align the helical structure in the thickness direction of the liquid crystal layer 14.

The light control member 10 including the liquid crystal layer 14 using the GH-method can control light by aligning dichroic dyes along with the liquid crystal molecules. Consequently, unlike reflective liquid crystal display devices, even though the light control member 10 includes the particles 33, the light control member 10 is minimally affected by light scattering due to surface irregularities caused by the particles 33, i.e., the first protrusions 231A. Furthermore, the inclusion of a chiral agent in the liquid crystal layer 14 effectively reduces light leakage in the light-blocking state.

When a voltage is applied to at least one of the first electrode 22A or the second electrode 22B through wiring, an electric field is formed. The function of the electric field can change the alignment of the liquid crystal molecules within the liquid crystal layer 14. The alignment of the liquid crystal molecules can potentially change the polarization direction of light passing through the liquid crystal layer 14.

The first alignment layer 23A and the second alignment layer 23B may be configured as horizontal alignment layers with regulation forces for pretilt alignment in a specific direction, such that the guest-host liquid crystal composition is aligned for the light-blocking state in the absence of an electric field, thereby configuring the light control member 10 as normally dark. Alternatively, the light control member 10 may be configured as normally clear, entering the light-blocking state when an electric field is applied. Here, "normally dark" refers to the structure for entering the light-blocking state with minimal transmittance when no voltage is applied to the liquid crystals. On the other hand, "normally clear" refers to the structure for entering the light-transmitting state when no voltage is applied to the liquid crystal. For example, in a case where the liquid crystal layer 14 is configured as normally dark using the liquid crystals of the GH-method, the liquid crystal molecules and dichroic dye compositions align horizontally relative to the first alignment layer 23A and the second alignment layer 23B in the absence of voltage, thereby blocking light. As voltage is applied, the liquid crystal molecules and dichroic dye compositions transition from horizontal to vertical alignment relative to the first alignment layer 23A and the second alignment layer 23B, increasing visible light transmittance. In the state where sufficient voltage is applied, the liquid crystal molecules and dichroic dye compositions align vertically relative to the first alignment layer 23A and the second alignment layer 23B, thereby allowing light to pass through. Thus, the light control member 10 is capable of adjusting visible light transmittance by changing the alignment of the liquid crystal molecules in the liquid crystal layer 14 by controlling applied voltage.

In the present embodiment, the light control member 10 is configured as normally dark, entering the light-blocking state in the absence of an electric field. Light leakage from the light control member 10 is noticeable, particularly in the light-blocking state. Therefore, the light control member 10 is configured as normally dark, entering the light-blocking state in the absence of an electric field, thereby allowing for enhancing the effect of suppressing light leakage.

The liquid crystal layer 14 may utilize liquid crystal compounds without polymerizable functional groups, such as nematic liquid crystal compounds, smectic liquid crystal compounds, and cholesteric liquid crystal compounds. Examples of nematic liquid crystal compounds include biphenyl compounds, terphenyl compounds, phenylcyclohexyl compounds, biphenylcyclohexyl compounds, phenylbicyclohexyl compounds, trifluoro compounds, phenyl benzoate compounds, cyclohexyl phenyl benzoate compounds, phenyl phenyl benzoate compounds, bicyclohexyl carboxylate phenyl compounds, azomethine compounds, azo compounds, azoxy compounds, stilbene compounds, tolane compounds, ester compounds, bicyclohexyl compounds, phenylpyrimidine compounds, biphenylpyrimidine compounds, pyrimidine compounds, biphenylethyne compounds, and the like.

Examples of smectic liquid crystal compounds include ferroelectric polymer liquid crystal compounds such as polyacrylate-based, polymethacrylate-based, polychloroacrylate-based, polyoxysilane-based, polysiloxanebased, and polyester-based compounds. Examples of cholesteric liquid crystal compounds include cholesteryl linoleate, cholesteryl oleate, cellulose, cellulose derivatives, polypeptides, and the like.

The dichroic dyes used in the GH method are dyes with high dichroic properties and solubility in liquid crystals. Examples of dichroic dyes include azo-based, anthraquinonebased, quinophthalone-based, perylene-based, indigo-based, thioindigo-based, merocyanine-based, styryl-based, azomethinebased, tetrazine-based dichroic dyes, and the like.

The scenery or objects are desired to be visible through the light control member 10 in the light-transmitting state. Therefore, the haze value in the light-transmitting state is desired to be low. Specifically, the haze value of the light control member 10 in the light-transmitting state is desired to be 10% or less, more desirably 5% or less. In order to achieve such low haze values, the liquid crystal mixture is desired not to contain polymerizable compounds.

The thickness of the liquid crystal layer 14 is between 3 µm and 20 µm inclusive, preferably between 5 µm and 15 µm inclusive. The thickness of the liquid crystal layer 14 is equivalent to the space secured by the bead spacers 24 between the first laminate 12 and the second laminate 13. The thickness of the liquid crystal layer 14 is determined as the average of the measurements taken at 30 points on the liquid crystal layer 14, which are deemed sufficient to reflect the overall trend.

As illustrated in FIG. 2, the sealing material 25 circumferentially surrounds the liquid crystal layer 14. In other words, the sealing material 25 partitions the liquid crystal layer 14. As illustrated in FIG. 2, the sealing material 25 is arranged between the first laminate 12 and the second laminate 13. The sealing material 25 functions to prevent the liquid crystal molecules in the liquid crystal layer 14 from leaking out between the first laminate 12 and the second laminate 13, and functions to adhere and fix the first laminate 12 and the second laminate 13 together. The sealing material 25 can be formed from thermosetting resins or ultraviolet-curable resins, such as epoxy resins or acrylic resins.

The bead spacers 24 maintain a defined space between the first laminate 12 and the second laminate 13. The liquid crystal material including the liquid crystal molecules fills this space to form the liquid crystal layer 14. The liquid crystal layer 14 controls the phase modulation of transmitted light, and is thus required to have a relatively uniform thickness between the first laminate 12 and the second laminate 13. Therefore, the bead spacers 24 are preferably spherical. The diameter of the bead spacers 24 is between 3 µm and 20 µm inclusive, preferably between 5 µm and 15 µm inclusive. The diameter of the bead spacers 24 is determined as the average of the measurements taken at 30 samples of the bead spacers 24, which are deemed sufficient to reflect the overall trend. In particular, the diameter of the bead spacers 24 described here is determined as the average of the measurements taken at 30 samples. In a case where the diameter of the bead spacers 24 is less than 3 µm, the height h of the first protrusions 231A is between 0.2 µm and 2.0 µm inclusive, which does not allow the bead spacers 24 to achieve the intended function. In a case where the diameter of the bead spacers 24 exceeds 20 µm, the bead spacers 24 become more visible while the light control member 10 is in use, impairing the appearance of the light control member 10, and increasing the amount of liquid crystal material required, thus raising production costs of the light control member 10. The diameter of the bead spacers 24 is measured using the laser diffraction method.

The surface density of bead spacers 24 in a planar view is, for example, between 30 particles/mm² and 160 particles/mm² inclusive. In a case where the bead spacers are uniformly dispersed throughout the light control member 10, the surface density of the bead spacers is calculated by counting the number of the bead spacers 24 within a given area (e.g., a 1 mm square area) of the light control member 10. In particular, in the light control body 1 produced with the manufacturing method described later, the surface density of the bead spacers 24 in the light control body 1 is determined based on the count of the bead spacers 24 within a 1 mm square area. In a case where the bead spacers 24 are aggregated, i.e., the plurality of bead spacers 24 form clusters, one aggregate of the bead spacers 24, i.e., one cluster of the bead spacers 24, is counted as one bead spacer 24.

The plurality of bead spacers 24 are discretely arranged between the first laminate 12 and the second laminate 13. The bead spacers 24 may be uniformly or non-uniformly distributed between the first laminate 12 and the second laminate 13. The bead spacers 24 is formed from inorganic materials such as silica, organic materials such as acrylic resins, or a coreshell structure combining these materials.

In addition to the bead spacers 24, columnar spacers or similar structures may also be arranged between the first laminate 12 and the second laminate 13. As long as the spacers can secure a defined space between the first laminate 12 and the second laminate 13, the shape of the spacers is not restricted. Columnar spacers can be formed at desired positions using photolithography techniques.

### (Surface Roughness of First Laminate 12 and Second Laminate 13)

Samples 1 and 2 corresponding to examples of the first laminate 12, and Samples 3 and 4 corresponding to the examples of the second laminate 13 were prepared, and the arithmetic average roughness (Ra) of the both surfaces of the Samples was measured. Samples 1 and 2 include the first alignment layer 23A, the first electrode 22A, the silicon oxide (SiO₂) layer, the first resin layer 31A, the first substrate 21A, and the first protective layer 32A, which are stacked in this order from the liquid crystal layer 14 side. In Samples 1 and 2, the particles 33 are dispersed in the resin material of the first resin layer 31A, and the particles 33 form the first protrusions 231A. The thickness of the first substrate 21A differs between Samples 1 and 2.

Samples 3 and 4 include the second alignment layer 23B, the second electrode 22B, the silicon oxide (SiO₂) layer, the second resin layer 31B, the second substrate 21B, and the second protective layer 32B, which are stacked in this order from the liquid crystal layer 14 side. In Samples 3 and 4, the spherical bead spacers 24 are dispersed and arranged on the second alignment layer 23B. The thickness of the second substrate 21B differs between Samples 3 and 4.

In Samples 1 to 4, the thickness of the first alignment layer 23A and the second alignment layer 23B is 0.1 µm, the thickness of the first electrode 22A and the second electrode 22B is 30 nm, the thickness of the SiO₂ layer is 15 nm, and the thickness of the first protective layer 32A and the second protective layer 32B is 1.0 µm. The thickness of the first resin layer 31A in Samples 1 and 2 is 1.4 µm, and the thickness of the second resin layer 31B in Samples 3 and 4 is 1.8 µm.

The thickness of the first substrate 21A in Sample 1 is 125 µm, and the thickness of the first substrate 21A in Sample 2 is 188 µm. The thickness of the second substrate 21B in Sample 3 is 125 µm, and the thickness of the second substrate 21B in Sample 4 is 188 µm. The average particle diameter of the particles 33 in Samples 1 and 2 is 1.8 µm. The average particle diameter of the bead spacers 24 in Samples 3 and 4 is 12 µm.

Samples 1 and 2 satisfy the condition that the ratio of the total area A1 of the particles 33 to the area A0 of the liquid crystal layer 14 is between 0.03% and 1.00% inclusive, in a planar view. Similarly, Samples 3 and 4 satisfy the condition that the surface density of the bead spacers 24 is between 30 particles/mm² and 160 particles/mm² inclusive.

Using Samples 1 to 4, the arithmetic average roughness (Ra) of the surface on the alignment layer side as well as the surface on the protective layer side of each sample was measured three times using the white-light interference cross-sectional measurement device "Vert Scan R5500GML-A150-AC" manufactured by Ryoka Systems Inc. The measurement conditions are as follows:
- Single-field measurement
- Objective lens: 2.5x, tube lens: 1x
- Zoom lens: No relay
- Wavelength selection filter: 530 white
- Measurement mode: Wave mode
- Polarization filter: None
- Surface correction: Fourth order

**Table 1**

| | Ra (nm) | | | |
|---|---|---|---|---|
| | FIRST | SECOND | THIRD | AVERAGE |
| SAMPLE 1 | 44 | 44 | 44 | 44 |
| SAMPLE 2 | 40 | 39 | 39 | 39 |
| SAMPLE 3 | 27 | 30 | 28 | 28 |
| SAMPLE 4 | 36 | 34 | 30 | 33 |

**Table 2**

| | Ra (nm) | | | |
|---|---|---|---|---|
| | FIRST | SECOND | THIRD | AVERAGE |
| SAMPLE 1 | 4 | 4 | 5 | 4 |
| SAMPLE 2 | 5 | 4 | 7 | 5 |
| SAMPLE 3 | 5 | 5 | 5 | 5 |
| SAMPLE 4 | 4 | 4 | 4 | 4 |

Table 1 lists the measurement results and averages of the arithmetic average roughness (Ra) for the surfaces on the first alignment layer 23A side of Samples 1 to 4. Table 2 lists the measurement results and averages arithmetic average of the roughness (Ra) for the surfaces on the first protective layer 32A side of Samples 1 to 4. Tables 1 and 2 also list the first to third measurement results and averages.

As listed in Table 1, the arithmetic average roughness (Ra) of the surface on the first alignment layer 23A side of Samples 1 and 2 corresponding to the examples of the first laminate 12, i.e., the surface with the first protrusions 231A formed thereon, was 44 nm for Sample 1, and 39 nm for Sample 2. In Samples 3 and 4 corresponding to the examples of the second laminate 13, in which the bead spacers 24 are dispersed and arranged on the second alignment layer 23B, the arithmetic average roughness (Ra) of the surface with the bead spacers 24 arranged thereon was 28 nm for Sample 3, and 33 nm for Sample 4. As listed in Table 2, the arithmetic average roughness (Ra) of the surface on the first protective layer 32A side of Samples 1 and 2, and the surface on the second protective layer 32B side of Samples 3 and 4, was 4 to 5 nm in all cases.

### (Effects of Protrusions)

In general, alignment layers are formed by applying a material for alignment layers onto a transparent electrode followed by drying. In conventional first laminates without particles 33 in the first resin layer 31A, the surface of the first alignment layer 23A is flat. Consequently, during the manufacturing process after coating and drying the material to form the first alignment layer 23A, objects such as guide rollers may come into contact with the surface and rub against the surface, resulting in extensive and variously sized scratches on the surface of the first alignment layer 23A due to the large contact area. Due to such scratches, the liquid crystal material of the liquid crystal layer 14 at positions corresponding to the scratches is aligned in an unintended predetermined direction. As a result, the light control member using the first laminate 12 including the scratched first alignment layer 23A transmit light unevenly due to uneven liquid crystal alignment, resulting in poor appearance and significantly degraded product quality.

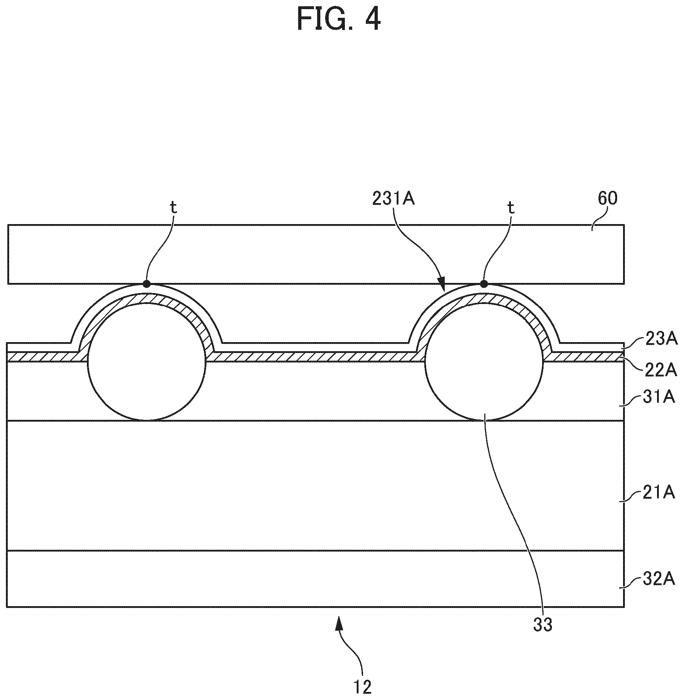

FIG. 4 is a diagram illustrating the aspect of how the object 60 comes into contact with the surface on the liquid crystal layer 14 side of the first laminate 12 of the present embodiment. FIG. 4 is an enlarged cross-sectional view of the first laminate 12. In the present embodiment, the first resin layer 31A contains the particles 33, thereby forming the plurality of first protrusions 231A on the surface of the first alignment layer 23A. Therefore, in the first laminate 12 of the present embodiment, as illustrated in FIG. 4, when the object 60 such as a hard material like a guide roller contacts the surface on the liquid crystal layer 14 side of the first alignment layer 23A, the apex of the first protrusion 231A contacts the object 60 at the point t, allowing for reducing the contact area. Even if the surface on the liquid crystal layer 14 side of the first alignment layer 23A is scratched or peeled during such contact, the resulting scratches are small enough to be visually imperceptible, minimizing any observable unevenness in transmitted light.

In a case where the object 60 is made of a soft or flexible material, the first alignment layer 23A of the present embodiment and such an object 60 may still contact between the first protrusions 231A. However, in the first laminate 12 of the present embodiment, as compared to the conventional first alignment layer without the first protrusions 231A, the contact area with the object 60 can be reduced, and scratches on the surface of the first alignment layer 23A can be suppressed. Particularly, in the present embodiment, the height h of the first protrusions 231A (see FIG. 3) is between 0.2 µm and 2.0 µm inclusive, more preferably between 0.4 µm and 1.0 µm inclusive, thereby allowing for effectively suppressing scratches, and suppressing non-uniform liquid crystal alignment. Thus, according to the present embodiment, surface scratches on the first alignment layer 23A during manufacturing processes can be significantly reduced, thereby allowing for reducing poor appearance caused by scratches.

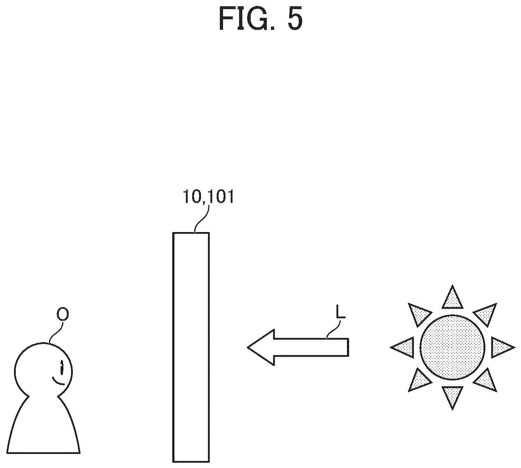

Furthermore, the first resin layer 31A of the present embodiment contains the particles 33, thereby allowing for suppressing uneven brightness when strong light enters the light control member 10 in the light-blocking state as shown later, thereby allowing for achieving excellent appearance quality. FIG. 5 is a diagram illustrating the aspect of observing the light control member 10 of the embodiment, and a light control member 101 of the comparative example. FIG. 5 illustrates an aspect of how the observer O views the light control member 10, 101 in the light-blocking state, in which strong light L such as sunlight enters from behind the light control members 10, 101.

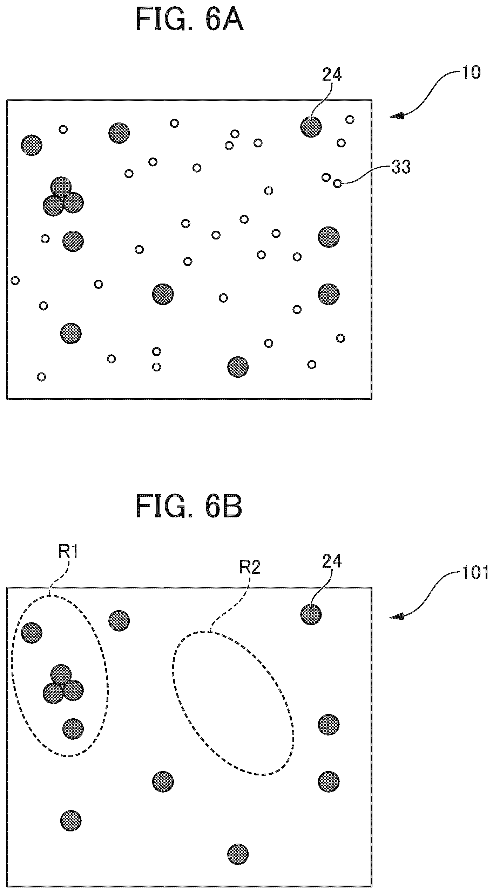

FIGS. 6A and 6B are schematic diagrams illustrating the distribution of the bead spacers 24 in the light control member 10 of the present embodiment and the light control member 101 of the comparative example, respectively. FIG. 6A illustrates the light control member 10 of the present embodiment, and FIG. 6B illustrates the light control member 101 of the comparative example without particles 33 in the first resin layer 31A. In order to facilitate understanding, FIG. 6A illustrates only the bead spacers 24 and the particles 33 of the light control member 10, and FIG. 6B illustrates only the bead spacers 24 of the light control member 101. As illustrated in FIGS. 6A and 6B, in both the present embodiment and the comparative example, the bead spacers 24 are irregularly arranged between the first laminate 12 and the second laminate 13. Consequently, a region with densely arranged bead spacers (region R1 in FIG. 6B) and a region with sparsely arranged or no bead spacers (region R2 in FIG. 6B) exist.

In this state, as illustrated in FIG. 5, strong light L such as sunlight enters the light control member 10, 101 that is in the light-blocking state, and the observer O views the light control member 10, 101. In the case of the light control member 101 of the comparative example, the region with densely arranged bead spacers 24 (region R1) appears bright, while the region without bead spacers 24 (region R2) appears dark, leading to uneven brightness. This uneven brightness arises because part of the incident light reflects at the edges of the bead spacers 24, increasing transmitted light at the edges. Consequently, in the light control member 101 of the comparative example, the region with densely arranged bead spacers 24 (region R1) appears bright, while the sparsely arranged region (region R2) appears dark. Such uneven brightness, causing poor appearance and reducing the quality of the light control body, is undesirable.

In contrast, in the light control member 10 of the present embodiment, the first resin layer 31A contains the particles 33, resulting in part of the incident light reflected at the edges of the particles 33, slightly increasing transmitted light. As a result, the light control member 10 of the present embodiment can brighten the region with sparsely arranged bead spacers 24 (region R2). Therefore, in the present embodiment, even in the case of receiving strong light in the light-blocking state, the light control member 10 and the light control body 1 can achieve excellent appearance without uneven brightness.

Thus, the present embodiment can provide the light control member 10 and the light control body 1 that suppress scratches on the first alignment layer 23A and reduces poor appearance caused by such scratches. Moreover, the present embodiment can reduce brightness unevenness caused by uneven distribution of the bead spacers 24, allowing for improving the overall appearance quality.

### (Modified Embodiment)

The embodiments described above are not intended to limit the present invention, and various modifications and alterations are possible within the scope of the invention.

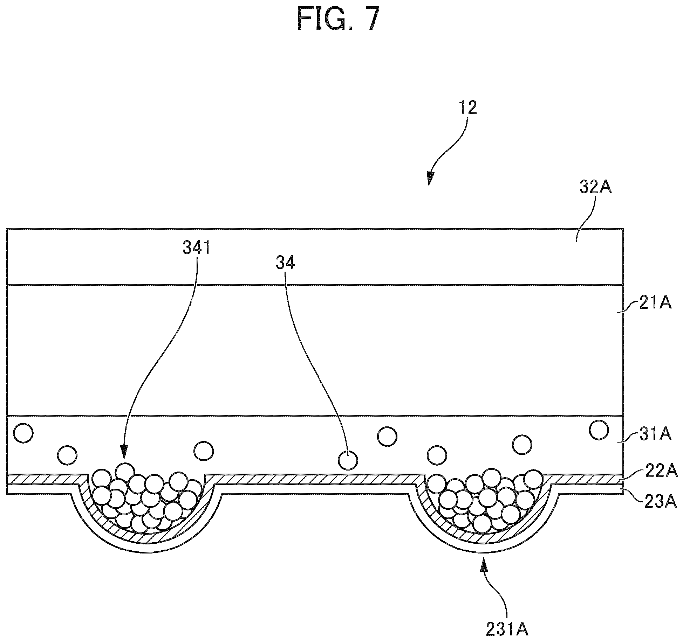

(1) In the embodiment, the particles 33 contained in the first resin layer 31A may alternatively be smaller particles, referred to as nanofillers 34. FIG. 7 is an enlarged cross-sectional view illustrating the first laminate 12 of a modified embodiment. As illustrated in FIG. 7, the first resin layer 31A of the first laminate 12 of the modified embodiment includes dispersed nanofillers 34. The nanofillers 34 are spherical or approximately spherical, with an average particle diameter between 10 nm and 100 nm inclusive. This case uses the nanofillers 34 with an average particle diameter of, for example, 100 nm. The nanofillers 34 are preferably formed from materials such as acrylic resin, styrene-based resin, or urethane-based resin, similar to the particles 33 described in the embodiment.

In this modified embodiment, the nanofillers 34 aggregate in aggregation regions 341 formed on the liquid crystal layer 14 side of the first resin layer 31A. The first alignment layer 23A is formed on the liquid crystal layer side of the first resin layer 31A, thereby forming the first protrusions 231A on the liquid crystal layer 14 side of the first alignment layer 23A.

The height h (protrusion height) of the first protrusions 231A is between 0.2 µm and 2.0 µm inclusive, which is defined as the dimension h from the surface on the liquid crystal layer 14 side of the first alignment layer 23A, where no first protrusions are formed, to the apex of the first protrusions 231A (the point farthest toward the liquid crystal layer 14 side), in the thickness direction of the light control member 10 (d direction). The height h of the first protrusions 231A is more preferably between 0.4 µm and 1.0 µm inclusive. The height h of the first protrusions 231A is determined as the average of the measurements taken at 30 samples of the first protrusions 231A, which are deemed sufficient to reflect the overall trend. Particularly, the height of the first protrusions 231A, produced using the manufacturing method described later and specifically configured as described here, is measured using a scanning white light interferometer ("Zygo" manufactured by Zygo Corporation). New View 9000 interferometer (manufactured by Zygo Corporation) is used as a scanning white light interferometer.

In order to form the first resin layer 31A, a resin material containing the dispersed nanofillers 34 is applied to the surface of the first substrate 21A and cured. By regulating various manufacturing conditions, the nanofillers 34 can be partly aggregated to form the aggregation regions 341 on the surface of the first resin layer 31A.

Even in the case of using the light control member of the modified embodiment, as in the case of the embodiment described above, the transparency of the light control member 10 can be secured, while allowing for suppressing scratches on the first alignment layer 23A, and suppressing poor appearance caused by such scratches. Even in this modified embodiment, as in the case of the embodiment described above, uneven brightness caused by uneven distribution of the bead spacers 24 can also be reduced.

(2) In the embodiment, the particles 33 are dispersed in the first resin layer 31A of the first laminate 12; however, this is not limiting. For example, the particles 33 may be dispersed in the second resin layer 31B of the second laminate 13, or in both the first resin layer 31A of the first laminate 12 and in the second resin layer 31B of the second laminate 13.

In the case where the second resin layer 31B includes the particles 33, protrusions protruding by the particles 33 are formed on the surface of the second electrode 22B when forming the second alignment layer 23B. The second alignment layer 23B including the bead spacers 24 is formed on the surface of the second electrode 22B with the plurality of protrusions, thereby allowing for expecting the effect of improving the dispersing property of the bead spacers 24.

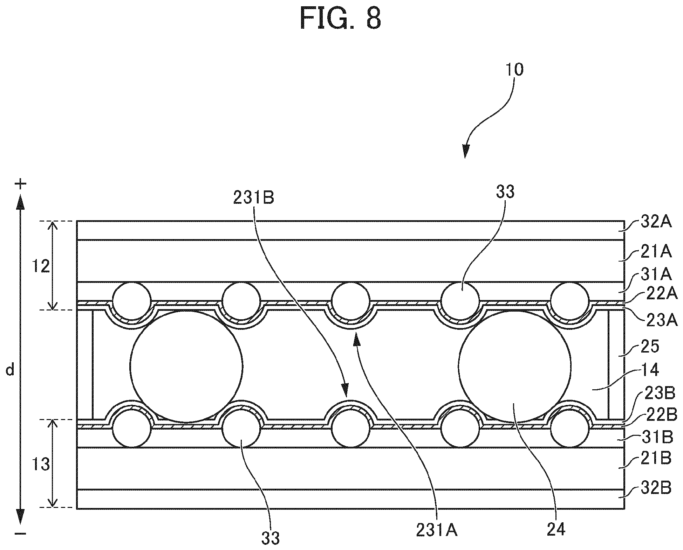

FIG. 8 is a diagram illustrating the light control member 10 of the modified embodiment. FIG. 8 illustrates a cross-sectional view of the light control member 10 of the modified embodiment. The second laminate 13 includes the second resin layer 31B containing the dispersed particles 33, between the second substrate 21B and the second alignment layer 23B. The second alignment layer 23B includes the plurality of second protrusions 231B on the surface facing the liquid crystal layer 14. The particles 33 are positioned as overlapping with the second protrusions 231B in the thickness direction of the light control member 10.

The particles 33 are included in both the first resin layer 31A of the first laminate 12 and the second resin layer 31B of the second laminate 13, and the plurality of first protrusions 231A and the plurality of second protrusions 231B are formed on the liquid crystal layer 14 side of the first alignment layer 23A and the second alignment layer 23B, respectively. This configuration can further enhance the effect of reducing uneven brightness when strong light enters the light control member 10 in the light-blocking state.

When the particles 33 are dispersed in both the first resin layer 31A and the second resin layer 31B, the upper limit of the height h of the first protrusions 231A and the second protrusions 231B is preferably 1.0 µm. The height of the first protrusions 231A may differ from or be the same as the height of the second protrusions 231B. In other words, the upper limit of the particle size of the particles 33 dispersed in the first resin layer 31A and the particle size of the particles 33 dispersed in the second resin layer 31B is preferably 1.0 µm. Similarly, the particle size of the particles 33 dispersed in the first resin layer 31A may differ from or be the same as the particle size of the particles 33 dispersed in the second resin layer 31B.

(3) In the embodiment, the first resin layer 31A, the second resin layer 31B, the first protective layer 32A, and the second protective layer 32B are described to include the hard coat function; however, this is not limiting. These layers may be designed with other functions, as long as sufficient optical transparency and reliability (e.g., heat resistance, weather resistance) of the light control member 10 as a product can be ensured.

For example, the first protective layer 32A and the second protective layer 32B, which form the front and back surfaces of the light control member 10, may include additional functions such as anti-fouling, UV absorption, anti-static properties, or heat absorption. Alternatively, layers with such functions may be further stacked.

For instance, the first resin layer 31A may lack the hard coat function, and instead, a hard coat layer (not illustrated) may be formed between the first substrate 21A and the first resin layer 31A. Furthermore, an additional layer with optical transparency and other functions, such as a refractive index regulating layer (index matching layer), may be arranged between the first substrate 21A and the first resin layer 31A, or between the first resin layer 31A and the first electrode 22A.

Next, an example of a method of manufacturing the light control member 10 and the light control body 1 will be described.

### (Method of Manufacturing Light Control Member 10)

First, the first laminate producing step and the particle dispersing step will be described. The first substrate 21A is prepared, and subsequently, the first resin layer 31A is formed. The first resin layer 31A is produced in the particle dispersing step of dispersing the particles 33 in the resin material. Subsequently, the first electrode 22A, formed from ITO (Indium Tin Oxide) for example, is formed on the first resin layer 31A with a sputtering technique using a sputtering device. In this case, the first electrode 22A may be patterned into a predetermined shape. A coating liquid for forming the first alignment layer 23A is applied to the first substrate 21A, on which the first electrode 22A has been formed, thereby forming the first alignment layer 23A. Specifically, at first, the first resin layer 31A containing the dispersed particles 33 is formed on the first substrate 21A, the first electrode 22A is deposited on the first resin layer 31A, subsequently, a composition for forming the first alignment layer 23A is applied onto the first electrode 22A, the coating is dried in an oven to volatilize solvents, and thereafter, an alignment regulation force is imparted to the coating film, thereby forming the first alignment layer 23A, allowing for producing the first laminate 12.

In this manner, the first laminate 12 is prepared, in which the first substrate 21A, the first resin layer 31A, the first electrode 22A, and the first alignment layer 23A are stacked. In this case, the first protective layer 32A may be formed on the surface of the first substrate 21A opposite to the surface, on which the first resin layer 31A has been formed.

Next, the second laminate producing step will be described. The second substrate 21B is prepared, and the second electrode 22B formed from ITO, for example, is formed on the second substrate 21B with a sputtering technique using a sputtering device. In this case, the second electrode 22B may be patterned into a predetermined shape. A coating liquid for forming the second alignment layer 23B is applied to the second substrate 21B, on which the second electrode 22B has been formed, thereby producing the second alignment layer 23B. Specifically, at first, the second electrode 22B is deposited on the second substrate 21B, subsequently, a composition for forming the second alignment layer 23B is applied onto the second electrode 22B, the coating is dried in an oven to volatilize solvents, and thereafter, an alignment regulation force is imparted to the coating film, thereby forming the second alignment layer 23B, allowing for producing the second laminate 13.

In this manner, the second laminate 13 is prepared, in which the second substrate 21B, the second electrode 22B, and the second alignment layer 23B are stacked. In this case, the second protective layer 32B may be formed on the surface of the second substrate 21B opposite to the surface, on which the second electrode 22B has been formed.

The second laminate 13 may include the second resin layer 31B between the second substrate 21B and the second alignment layer 23B. The second resin layer 31B may contain the dispersed particles 33. In this case, in the method of manufacturing the second laminate 13, as in the case of the first laminate 12, the second substrate 21B is prepared, and subsequently, the second resin layer 31B is formed. The second resin layer 31B is formed in the particle dispersing step of dispersing the particles 33 in the resin material. Next, on the second resin layer 31B, the second electrode 22B formed from ITO, for example, is formed on the second substrate 21B with a sputtering technique using a sputtering device. In this case, the transparent electrode may be patterned into a predetermined shape. A coating liquid for forming the second alignment layer 23B is applied to the second substrate 21B with the second electrode formed, thereby producing the second alignment layer 23B. Specifically, at first, the second resin layer 31B containing the dispersed particles 33 is formed on the second substrate 21B, the second electrode 22B is deposited on the second resin layer 31B, subsequently, a composition for forming the second alignment layer 23B is applied onto the second electrode 22B, the coating is dried in an oven to volatilize solvents, and thereafter, an alignment regulation force is imparted to the coating film, thereby forming the second alignment layer 23B, thereby allowing for producing the second laminate 13.

In this manner, the second laminate 13 is prepared, in which the second substrate 21B, the second resin layer 31B, the second electrode 22B, and the second alignment layer 23B are stacked. In this case, the second protective layer 32B may be formed on the surface of the second substrate 21B opposite to the surface where the second resin layer 31B is formed.

Next, the liquid crystal material supplying step will be described. The bead spacers 24 are arranged on the second alignment layer 23B of the second laminate 13. The bead spacers 24 can be arranged using various methods, including wet or dry spraying. For instance, the bead spacers 24 may be dispersed in a solvent with resin components to form a coating liquid, the coating liquid may be partially applied, subsequently executing the drying and baking steps in sequence, thereby randomly arranging the bead spacers held on the second alignment layer 23B so as to be unlikely to move. The outer periphery of the bead spacers 24 may be partially covered by the second alignment layer 23B. In this case, although not illustrated, the bead spacers 24 may be adhered to the second alignment layer 23B using adhesives. Alternatively, although not illustrated, the bead spacers 24 may be arranged on the second electrode 22B, and the outer periphery of the bead spacers 24 may be covered by the second alignment layer 23B. Specifically, the second alignment layer 23B is formed by mixing the bead spacers 24 with the coating liquid for the second alignment layer 23B, thereby allowing for achieving a configuration where the bead spacers 24 are thinly covered and held by the second alignment layer 23B.

Next, the sealing material 25 is applied to the second alignment layer 23B of the second laminate 13 using a dispenser. The sealing material 25 is applied in a frame shape to surround the region where the liquid crystal layer 14 will be formed. The material for the sealing material 25 is a viscous liquid material with adhesive or tacky properties. The material for the sealing material 25 hardens to form the sealing material 25. Subsequently, the liquid crystal material supplying step of supplying a liquid crystal material containing liquid crystal molecules to the region surrounded by the sealing material 25 on the second alignment layer 23B. In this case, the liquid crystal layer 14 is filled within the area enclosed by the sealing material 25 and around the bead spacers 24.

The liquid crystal sandwiching step of staking the first laminate 11 onto the second laminate 13 is described next. Under reduced pressure, the second laminate 13 containing the liquid crystal layer 14 and the pre-prepared first laminate 12 are stacked and pressed together. When the first laminate 12 is stacked on the second laminate 13, a roller may be used to smooth out the layers. Subsequently, ultraviolet light is applied to partially cure the sealing material 25, followed by heating to integrate the first laminate 12 and the second laminate 13. Thereafter, the laminate including the first laminate 12 and the second laminate 13, produced in this manner, may be trimmed to a desired size. Wiring is attached to the first laminate 12 and the second laminate 13 to connect to an external power source, thereby obtaining the light control member 10 according to the present embodiment.

### (Method of Manufacturing Light Control Body 1)

The method of manufacturing the light control body 1 according to the present embodiment will be described. First, a pair of transparent members (the first transparent member 41 and the second transparent member 42) are prepared. The first bonding layer 43 and the first transparent member 41 are stacked on the first laminate 12 side of the light control member 10 to bond the light control member 10 and the first transparent member 41. Similarly, the second bonding layer 44 and the second transparent member 42 are stacked on the second laminate 13 side of the light control member 10 to bond the light control member 10 and the second transparent member 42. As a result, the light control body 1 illustrated in FIG. 1 is produced. In a case where the surface shape of the light control body 1 is a three-dimensional curved surface, the pair of transparent members (the first transparent member 41 and the second transparent member 42) may be pre-shaped with the three-dimensional curved surface. Similarly, the light control member 10 may also be pre-shaped into the three-dimensional curved surface by thermoforming.

As described above, the light control member 10 of the present embodiment includes: the first laminate 12 including the first substrate 21A and the first alignment layer 23A stacked on the first substrate 21A; the second laminate 13 including a second substrate 21B and the second alignment layer 23B stacked on the second substrate 21B, in which the first alignment layer 23A and the second alignment layer 23B are arranged to face each other; and the liquid crystal layer 14 arranged between the first laminate 12 and the second laminate 13, in which the liquid crystal layer 14 contains liquid crystal molecules whose alignment is controlled by applying voltage to electrodes provided on at least one of the first laminate 12 or the second laminate 13. The first laminate 12 includes the first resin layer 31A containing the dispersed particles 33 between the first substrate 21A and the first alignment layer 23A. The first alignment layer 23A includes the first protrusions 231A on the surface facing the liquid crystal layer 14. The particles 33 are positioned as overlapping with the first protrusions 231A in the thickness direction of the light control member 10. In the light control member 10, the particles 33 dispersed in the first resin layer 31A result in the presence of the first protrusions 231A. The presence of the first protrusions 231A disrupts the flatness of the surface of the first alignment layer 23A, reducing the contact area with the object 60 such as guide rolls. The first protrusions 231A of the first alignment layer 23A are formed overlapping with the particles 33 dispersed in the first resin layer 31A, resulting in the particles 33 dispersed in the first alignment layer 23A, allowing for maintaining the shape of the first protrusions more stably than the case of forming the protrusions by dispersing the particles 33 in the first alignment layer 23A. Therefore, the light control member 10 can suppress scratches on the surface on the liquid crystal layer 14 side of the first alignment layer 23A caused by abrasion during contact with the object 60 such as guide rolls, thereby allowing for reducing poor appearance due to scratches.

The light control body 1 as such may be used not only for sunroofs but also for rear windows and side windows of automobiles. Beyond automobiles, the light control body can also be applied to transparent portions such as windows or doors of moving bodies including railway vehicles, aircrafts, ships, and spacecrafts.

Furthermore, the light control body 1 can also be used for non-moving bodies, particularly in places separating indoor and outdoor areas. Examples include transparent portions such as windows or doors of buildings, stores, and houses; transparent portions such as windows or doors of storage or preservation facilities such as refrigerators, display cases, and cabinets.

In the embodiments described above, the light control body 1 is formed by arranging the light control member 10 between the pair of transparent members (the first transparent member 41 and the second transparent member 42). However, the light control body 1 may also be formed by bonding the light control member 10 to a single transparent member.

### EXPLANATION OF REFERENCE NUMERALS

- 1:: light control body
- 10:: light control member
- 12:: first laminate
- 13:: second laminate
- 14:: liquid crystal layer
- 21A:: first substrate
- 21B:: second substrate
- 22A:: first electrode
- 22B:: second electrode
- 23A:: first alignment layer
- 23B:: second alignment layer
- 24:: bead spacer
- 25:: sealing material
- 31A:: first resin layer
- 31B:: second resin layer
- 32A:: first protective layer
- 32B:: second protective layer
- 33:: particle
- 231A:: first protrusion
- 231B:: second protrusion
- 41:: first transparent member
- 42:: second transparent member
- 43:: first bonding layer
- 44:: second bonding layer

## Claims

1. A light control member, comprising:
a first laminate including a first substrate and a first alignment layer stacked on the first substrate;
a second laminate including a second substrate and a second alignment layer stacked on the second substrate, the first alignment layer and the second alignment layer being arranged to face each other; and
a liquid crystal layer arranged between the first laminate and the second laminate, the liquid crystal layer including liquid crystal molecules whose alignment is controlled by applying voltage to an electrode provided on at least one of the first laminate or the second laminate, wherein
the first laminate further including a first resin layer including dispersed particles between the first substrate and the first alignment layer,
the first alignment layer including first protrusions on a surface facing the liquid crystal layer, and
the particles positioned as overlapping with the first protrusions in a thickness direction of the light control member.

2. The light control member according to claim **1,** wherein
a height of the first protrusions is between 0.2 µm and 2.0 µm inclusive in the thickness direction of the light control member.

3. The light control member according to claim 1, wherein
when a total area of the first protrusions is S1, and an area of the liquid crystal layer is S0, a ratio of S1 to S0 is between 0.03% and 1.00% inclusive, in a planar view of the light control member.

4. The light control member according to claim 1, wherein
a particle diameter of the particles is larger than a thickness of the first resin layer.

5. The light control member according to claim 1, wherein
hardness of a surface of the first resin layer on a side of the first alignment layer is B or greater as determined by a pencil hardness test.

6. The light control member according to claim 1, wherein
the second laminate includes a second resin layer including dispersed particles between the second substrate and the second alignment layer,
the second alignment layer includes second protrusions on a surface facing the liquid crystal layer, and
the particles are positioned as overlapping with the second protrusions in the thickness direction of the light control member.

7. The light control member according to claim **1,** wherein
the liquid crystal layer includes a plurality of bead spacers arranged between the first laminate and the second laminate.

8. The light control member according to claim 1, wherein
the light control member serves as a transmissive light control member that regulates an amount of transmitted light.

9. The light control member according to claim 1, wherein
the liquid crystal layer includes a guest-host liquid crystal composition.

10. The light control member according to claim 1, wherein
the light control member enters a light-blocking state with minimum transmittance in the absence of an electric field.

11. The light control member according to claim 1, wherein
the liquid crystal layer includes a chiral agent.

12. The light control member according to claim 1, wherein
the electrode is a transparent electrode, and
the first resin layer and the first alignment layer are arranged with a first electrode therebetween.

13. A light control body, comprising:
a pair of transparent members; and
the light control member according to any one of claims 1 to 12 arranged between the pair of transparent members.

14. A method of manufacturing a light control member, the method comprising:
a first laminate producing step of producing a first laminate, the first laminate including a first substrate, a first alignment layer stacked on the first substrate, and a first resin layer between the first substrate and the first alignment layer;
a second laminate producing step of producing a second laminate, the second laminate including a second substrate and a second alignment layer stacked on the second substrate;
a liquid crystal material supplying step of supplying a liquid crystal material to a surface of the second alignment layer opposite to the second substrate; and
a stacking step of stacking the first laminate on the second laminate, wherein
the first laminate producing step includes a particle dispersing step of dispersing particles in the first resin layer.

15. A method of manufacturing a light control member, the method comprising:
a first laminate producing step of producing a first laminate, the first laminate including a first substrate, a first alignment layer stacked on the first substrate, and a first resin layer between the first substrate and the first alignment layer;
a second laminate producing step of producing a second laminate, the second laminate including a second substrate, a second alignment layer stacked on the second substrate, and a second resin layer between the second substrate and the second alignment layer;
a liquid crystal material supplying step of supplying a liquid crystal material to a surface of the second alignment layer opposite to the second substrate; and
a liquid crystal sandwiching step of stacking the first laminate on the second laminate, wherein
the first laminate producing step includes a particle dispersing step of dispersing particles in the first resin layer, and
the second laminate producing step includes a particle dispersing step of dispersing particles in the second resin layer.
